# EUROPEAN PATENT APPLICATION

(11) **EP 3 181 398 A1**
(43) Date of publication of application: **21.06.2017**
(21) Application number: 15831579.6
(22) Date of filing: 01.07.2015
(51) Int. Cl.: B60N 2/64, A47C 7/40

(54) **VEHICLE SEAT, VEHICLE SEAT MEMBER AND VEHICLE**

(30) Priority: 13.08.2014 JP 2014164950
(71) Applicant: G&G Australia Pty Ltd, Mount Waverley, VIC 3149 (AU); Shimoda, Yuzo, Mount Waverley, VIC 3149 (AU)
(72) Inventor: SHIMODA, Yuzo, Mount Waverly, Victoria 3149 (AU)
(74) Representative: Awapatent A/S
(86) International application number: PCT/JP2015/003321
(87) International publication number: WO 2016/024379

(57) **Abstract**

The purpose of the present invention is to improve the ride quality of an automobile or other vehicle at low cost. A vehicle seat (1) is provided with a seat cushion (10) for supporting the buttocks of a rider and a seat back (20) for supporting the back of the rider. At a substantially central position in the width direction of the seat back (20) in a location where the back of the rider is to be supported, a recessed part (51) or an opening (52) extending in the vertical direction is formed.

## Description

### Technical Field

The present invention relates to a vehicle seat used in a vehicle such as an automobile, and to a vehicle seat member and a vehicle.

### Prior Art

Since automobiles have become a part of this world, there has been a history of attempting to improve ride quality so that drivers and passengers can ride in comfort as far as possible, and various designs have been put forward up until now by automobile manufacturers and seat manufacturers in various countries around the world, with technical developments also being actively undertaken at the present time.

Impacts to which an automobile is subjected from the road surface are transmitted by the following path: tire → suspension → vehicle body → seat → vehicle occupant, and various methods have been devised in the past for lessening the impact at each of these locations. Depending on the type of automobile, considerable financial investments have been made into development aimed at improving ride quality while maintaining a constant level of drivability, and costly components have been incorporated, which also often entails large costs.

There is a problem, however, in that ride quality and drivability in vehicles such as automobiles are generally conflicting factors for which a balance is difficult to achieve; in order to improve ride quality, a certain sacrifice in terms of drivability is inevitable, but when an effort is made to improve drivability, this detracts from the ride quality.

Various means have been devised in order to simultaneously satisfy these two contradictory factors (e.g., see Patent Document 1), but the greater the effort to improve the degree of compatibility therebetween, the greater the costs in terms of development and components, so manufacturers inevitably have to be prepared for sizeable cost increases, and it is currently the case that there are also limits to areas where these means can actually be applied.

Furthermore, even if an effort is made to improve ride quality while maintaining drivability, it is difficult to produce an improvement for all kinds of road surfaces and all kinds of travel conditions, and there are often cases where any improvement in terms of ride quality is apparent only within a certain given range.

### Prior Art Document

### Patent Document

Patent Document 1: JP 2010-228601 A

### Summary of the Invention

### Problem to be Solved by the Invention

The present invention has been devised in light of the situation described above, and provides a vehicle seat which inexpensively enables an improvement in ride quality in a vehicle such as an automobile, and also provides a vehicle seat member and a vehicle.

### Means for Solving the Problem

A vehicle seat according to the present invention comprises: a seat cushion portion for supporting a vehicle occupant's buttocks, and a seat back portion for supporting a vehicle occupant's back, a recess or an opening extending in a vertical direction being formed in the seat back portion at a substantially central position in the widthwise direction at the location where the vehicle occupant's back should be supported.

In the vehicle seat according to the present invention, the recess or the opening may extend in a vertical direction including a central portion when the seat back portion is divided equally in three in the height direction thereof.

In the vehicle seat according to the present invention, a flexible member comprising a material softer than the seat back portion may be disposed inside the recess or inside the opening.

In the vehicle seat according to the present invention, the seat back portion may comprise a first seat back portion and a second seat back portion divided by means of an opening.

In the vehicle seat according to the present invention, the recess may be formed as a result of a projection being formed on the seat back portion.

In the vehicle seat according to the present invention, the seat back portion may comprise a lumbar support portion for supporting the lumbar region of a vehicle occupant.

A vehicle seat member according to the present invention can be installed on a seat back portion of a vehicle seat, and comprises an attachment seat main-body portion in which a recess or an opening extending in a vertical direction is formed at a substantially central position in the widthwise direction at the location where a vehicle occupant's back should be supported.

The vehicle seat member according to the present invention may further comprise a fixing member for fixing the attachment seat main-body portion to the seat back portion.

In the vehicle seat member according to the present invention, the recess or the opening may extend in a vertical direction including a central portion when the attachment seat main-body portion is divided equally in three in the height direction thereof.

In the vehicle seat member according to the present invention, a flexible member comprising a material softer than the attachment seat main-body portion may be disposed inside the recess or inside the opening.

In the vehicle seat member according to the present invention, the attachment seat main-body portion may comprise a first attachment seat main-body portion and a second attachment seat main-body portion divided by means of an opening, and the first attachment seat main-body portion and the second attachment seat main-body portion may be joined by means of a joining member.

In the vehicle seat member according to the present invention, a gap may be formed between the seat back portion and the vehicle seat member.

The vehicle seat member according to the present invention may be such that it cannot be removed from the vehicle seat.

The vehicle seat member according to the present invention the vehicle seat member may comprise a lumbar support portion for supporting the lumbar region of a vehicle occupant.

A vehicle seat to which the abovementioned vehicle seat member is attached.

A vehicle comprising the abovementioned vehicle seat.

### Advantage of the Invention

The present invention makes it possible to inexpensively improve ride quality in a vehicle such as an automobile by suppressing the transmission of impact to a vehicle occupant's backbone.

### Brief Description of the Drawings

[Fig. 1] Fig. 1 is an oblique view illustrating an example of a vehicle seat which may be used in a first mode of embodiment of the present invention;
[Fig. 2] Fig. 2(a) is a schematic front view illustrating a different example of a vehicle seat which may be used in the first mode of embodiment of the present invention, and fig. 2(b) is a schematic front view illustrating another different example of a vehicle seat which may be used in the first mode of embodiment of the present invention;

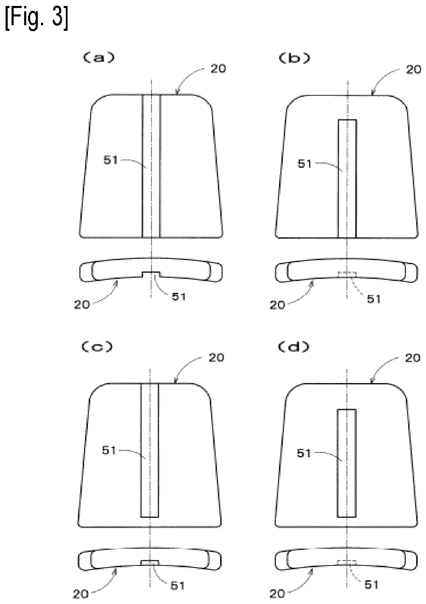

[Fig. 3] Fig. 3 illustrates a number of variations of a vehicle seat employed in a driver's seat or a passenger seat in an automobile, which may be used in the first mode of embodiment of the present invention, where fig. 3 (a) is a front view and a plan view illustrating a mode in which a recess extending in a vertical direction is formed from an upper end to a lower end of a seat back portion, fig. 3(b) is a front view and a plan view illustrating a mode in which a recess extending in a vertical direction is formed from the vicinity of the upper end to the lower end of the seat back portion, fig. 3(c) is a front view and a plan view illustrating a mode in which a recess extending in a vertical direction is formed from the upper end to the vicinity of the lower end of the seat back portion, and fig. 3(d) is a front view and a plan view illustrating a mode in which a recess extending in a vertical direction is formed from the vicinity of the upper end to the vicinity of the lower end of the seat back portion;
[Fig. 4] Fig. 4 (a) is a front view illustrating a mode in which recesses extending in a vertical direction are formed from an upper end to a lower end of a seat back portion of a bench seat, and fig. 4(b) is a plan view of fig. 4(a);
[Fig. 5] Fig. 5 is an oblique view illustrating a variant example of a vehicle seat which may be used in the first mode of embodiment of the present invention;
[Fig. 6] Fig. 6(a) is an oblique view illustrating a mode in which an opening extending in a vertical direction is formed from an upper end to a lower end of a seat back portion of a vehicle seat employed in a driver's seat or a passenger seat in an automobile, fig. 6(b) is a front view of fig. 6(a), and fig. 6(c) is a plan view of fig. 6(a);
[Fig. 7] Fig. 7 is an oblique view illustrating an example of a vehicle seat member which may be used in a second mode of embodiment of the present invention;

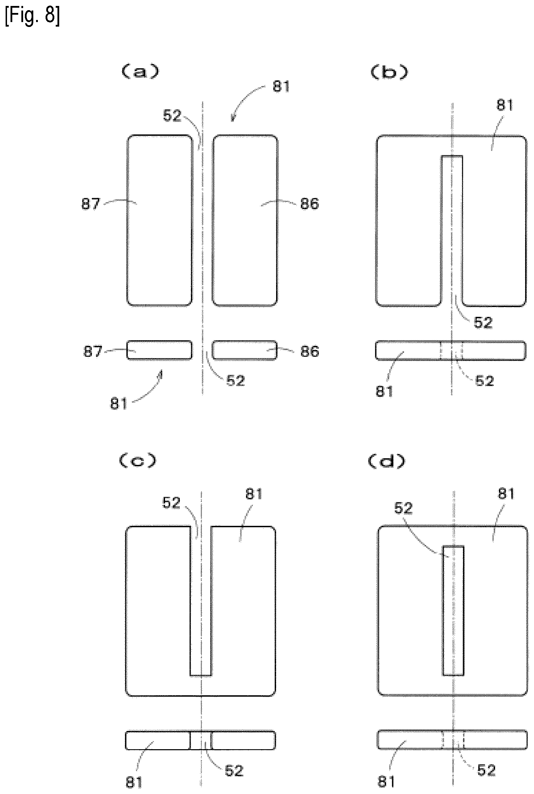

[Fig. 8] Fig. 8 illustrates a number of variations of a vehicle seat member employed in a driver's seat or a passenger seat in an automobile, which may be used in the second mode of embodiment of the present invention, where fig. 8(a) is a front view and a plan view illustrating a mode in which an opening extending in a vertical direction is formed from an upper end to a lower end of an attachment seat main-body portion, fig. 8 (b) is a front view and a plan view illustrating a mode in which an opening extending in a vertical direction is formed from the vicinity of the upper end to the lower end of the attachment seat main-body portion, fig. 8(c) is a front view and a plan view illustrating a mode in which an opening extending in a vertical direction is formed from the upper end to the vicinity of the lower end of the attachment seat main-body portion, and fig. 8(d) is a front view and a plan view illustrating a mode in which an opening extending in a vertical direction is formed from the vicinity of the upper end to the vicinity of the lower end of the attachment seat main-body portion;
[Fig. 9] Fig. 9 is an oblique view of a vehicle seat which may be used in the first mode of embodiment of the present invention, illustrating a vehicle seat having a lumbar support portion;
[Fig. 10] Fig. 10 is an oblique view of a vehicle seat which may be used in the first mode of embodiment of the present invention, illustrating a vehicle seat having a mesh portion;
[Fig. 11] Fig. 11 is an oblique view illustrating a different example of a vehicle seat which may be used in the first mode of embodiment of the present invention;
[Fig. 12] Fig. 12 is an oblique view illustrating a different example of a vehicle seat member which may be used in the second mode of embodiment of the present invention;
[Fig. 13] Fig. 13 is an oblique view illustrating another different example of a seat cushion portion which may be used in the first mode of embodiment of the present invention;
[Fig. 14] Fig. 14 is an oblique view illustrating another different example of a vehicle cushion member which may be used in the second mode of embodiment of the present invention;
[Fig. 15] Fig. 15 is a plan view of a vehicle seat which may be used in the first mode of embodiment of the present example, illustrating an example in which projections form an air cushion; and
[Fig. 16] Fig. 16 is a plan view of a vehicle seat which may be used in the first mode of embodiment of the present invention, illustrating a mode in which a gap is formed between a seat back portion and a projection.

### Mode of Embodiment of the Invention

### First Mode of Embodiment

### <<Configuration>>

A first mode of embodiment of the present invention will be described below with reference to the drawings.

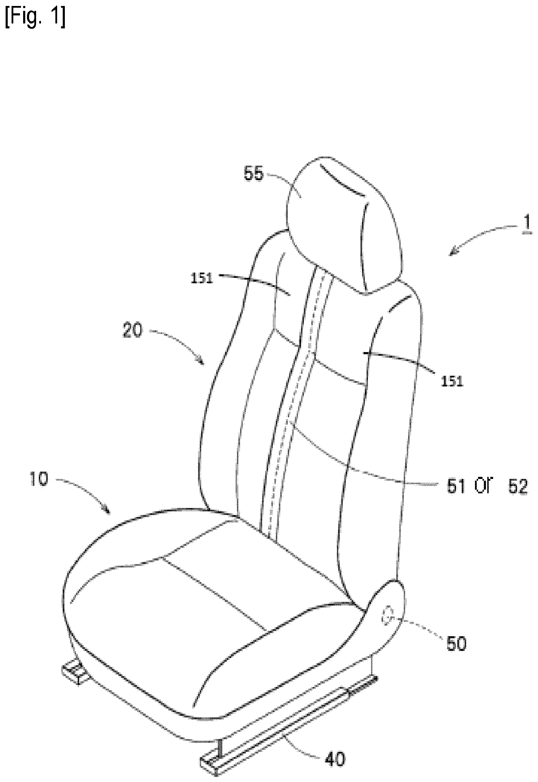

A vehicle seat 1 according to this mode of embodiment is typically an automobile seat such as that illustrated in fig. 1. This mode of embodiment will mainly be described below on the assumption that the vehicle seat 1 is an automobile seat.

As illustrated in fig. 1, a vehicle seat 1 comprises: a seat cushion portion 10 for supporting a vehicle occupant's buttocks, and a seat back portion 20 which extends upward from the vicinity of a rear-side end portion of the seat cushion portion 10 and supports the vehicle occupant's back. Furthermore, the seat cushion portion 10 is fixed to a floor panel of the vehicle body by way of guide rails 40 extending in a front-rear direction, and is able to slide forwards and backwards. Meanwhile, the seat back portion 20 is supported by the seat cushion portion 10 by way of a hinge portion 50 and is able to tilt forwards and backwards. A head restraint 55 for supporting the vehicle occupant's head is attached to an upper portion of the seat back portion 20 in such a way that the height thereof is adjustable. There is no particular need for the height of the head restraint 55 to be adjustable in this way, and the head restraint 55 may be fixed to the upper portion of the seat back portion 20 or may be formed as a single piece together with the seat back portion 20. A cover may also be provided on the head restraint 55. It should be noted that the seat back portion 20 does not necessarily have to be able to tilt forwards and backwards.

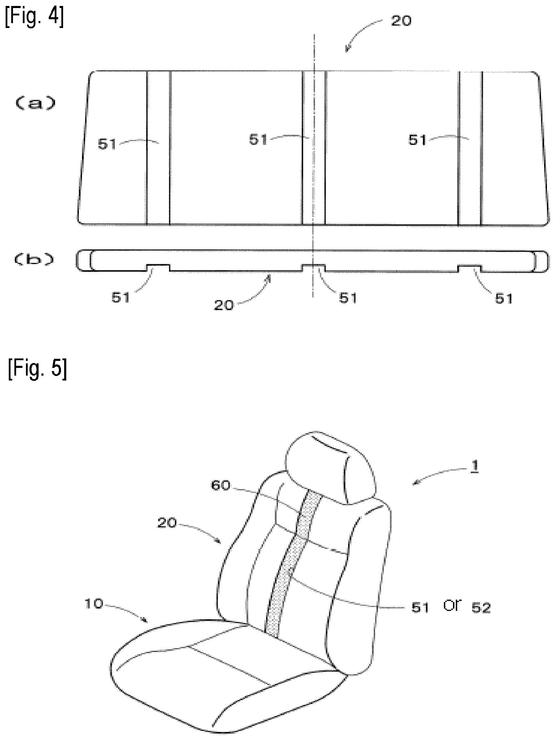

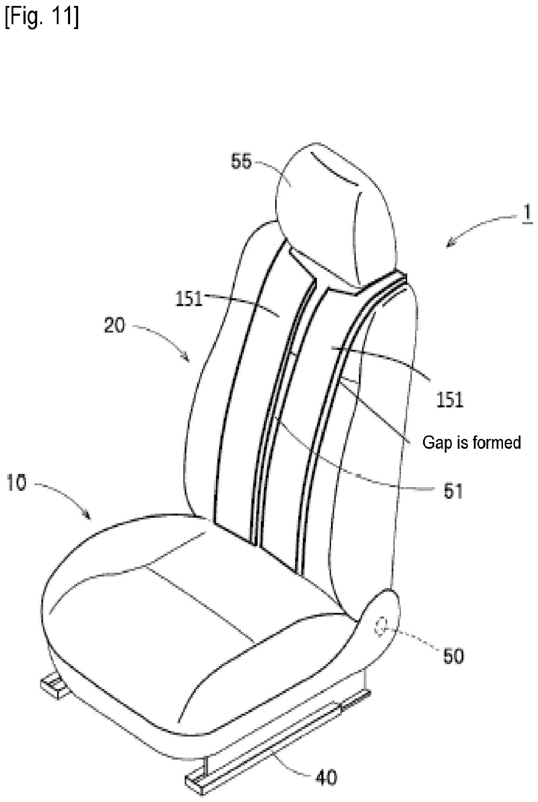

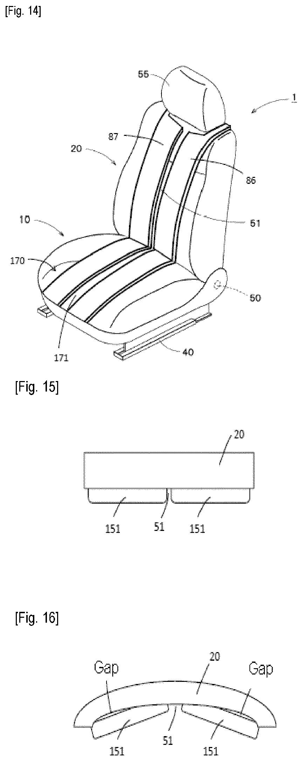

According to this mode of embodiment, a recess 51 or an opening 52 extending in a vertical direction is formed in the seat back portion 20 at a substantially central position in the widthwise direction at the location where the vehicle occupant's back should be supported (the dotted line in fig. 1 indicates a case in which the recess 51 is used and where there is no dotted line this indicates the opening 52). In this regard, it is assumed that one vehicle occupant is generally seated in each of the front seats such as the driver's seat and passenger seat, and therefore in the front seats, the recess 51 or the opening 52 extending in a vertical direction is formed at a substantially central position in the widthwise direction of the seat back portion 20. On the other hand, it is assumed that a number of vehicle occupants are seated on rear seats such as a bench seat (see fig. 4), and therefore recesses 51 or openings 52 extending in a vertical direction are formed at substantially central positions in the widthwise direction at locations where the vehicle occupants' backs should be supported (in fig. 4, there are three locations, but another number of locations is of course possible, for example two locations). It should be noted that in this mode of embodiment, an "opening" means a mode in which the seat back portion 20 is penetrated; the mode illustrated in fig. 4 is the "recess 51". Moreover, this mode of embodiment will be described using a form in which the recess 51 or the opening 52 extending "linearly" in a vertical direction is formed, but this is not limiting, and the recess 51 or the opening 52 may equally extend in a vertical direction with a slight zigzag, for example. Furthermore, the recess 51 need not have a uniform depth, and it may become deeper toward a center portion in the height direction, for example, and it may become shallower toward an upper end and/or a lower end. Furthermore, this change in depth may be continuous or intermittent. In the description of the content illustrated in fig. 1, it can be said that part of the seat back portion 20 is recessed to form the recess 51, and it can also be said that the recess 51 is formed by forming projections 151 on part of the seat back portion 20 (see fig. 11 also). The mode in which the projections 151 are formed can also be considered the same as the form of a second mode of embodiment to be described later in which a vehicle seat member 80 cannot be removed from the vehicle seat 1. There is no particular limitation as to the material of the projections 151, and they may be formed from an elastic member, or the projections 151 may be formed from leather, for example. Furthermore, the projections 151 may form an air cushion (see fig. 15 also). It should be noted that a "substantially central position" in the widthwise direction of the seat back portion 20 means a position (on a seat which is roughly bilaterally symmetrical) in a range within ±1/10 of the total length in the widthwise direction (transverse direction) of the seat back portion 20 from a "central position" in the widthwise direction of the seat back portion 20.

Furthermore, a gap may be formed between the seat back portion 20 and the projections 151. (fig. 16)

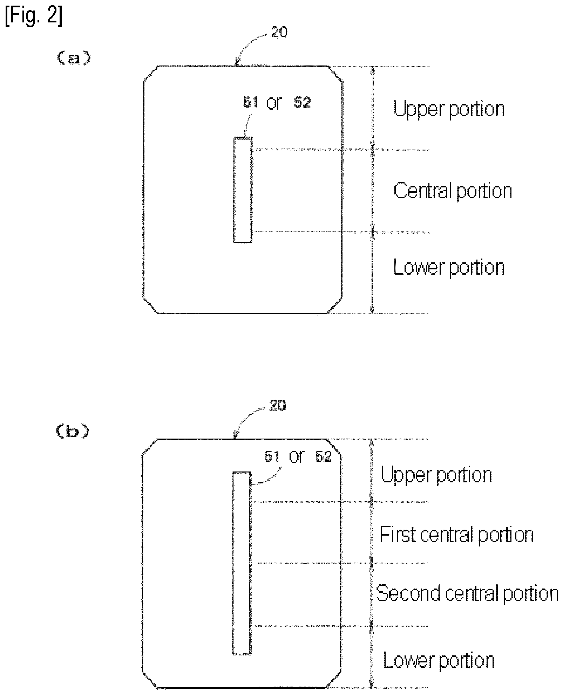

The recess 51 or the opening 52 may extend in a vertical direction including a central portion when the seat back portion 20 is divided equally in three in the height direction thereof (see fig. 2(a)), and may also extend in a vertical direction including two central portions (a first central portion and a second central portion) when the seat back portion 20 is divided equally in four in the height direction thereof (see fig. 2(b)).

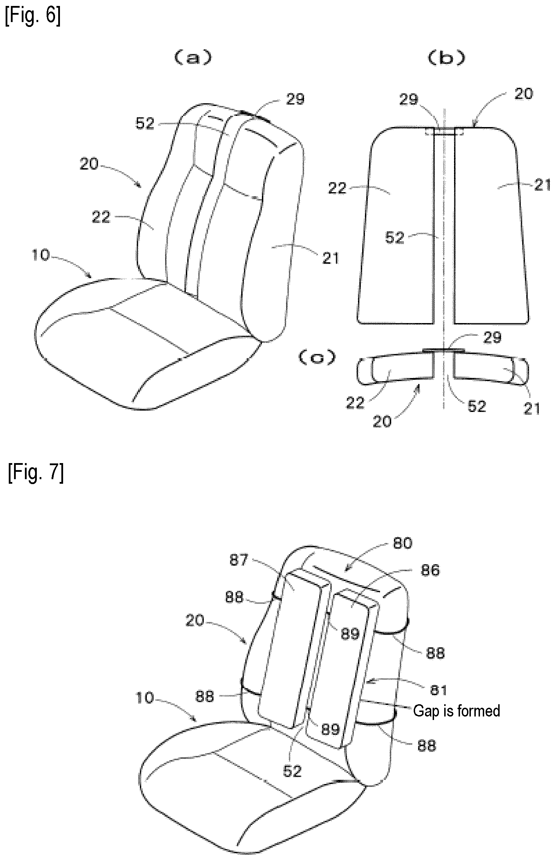

To be more specific, the recess 51 or the opening 52 extending in a vertical direction may be formed from an upper end to a lower end of the seat back portion 20 at a substantially central position in the widthwise direction of the seat back portion 20 (see fig. 3(a)). Furthermore, the recess 51 or the opening 52 extending in a vertical direction may be formed from the vicinity of the upper end to the lower end of the seat back portion 20 in a substantially central position in the widthwise direction of the seat back portion 20 (see fig. 3(b)). Furthermore, the recess 51 or the opening 52 extending in a vertical direction may be formed from the upper end to the vicinity of the lower end of the seat back portion 20 in a substantially central position in the widthwise direction of the seat back portion 20 (see fig. 3(c)). Furthermore, the recess 51 or the opening 52 extending in a vertical direction may be formed from the vicinity of the upper end to the vicinity of the lower end of the seat back portion 20 in a substantially central position in the widthwise direction of the seat back portion 20 (see fig. 3(d)). Here, the terms "in the vicinity of" the upper end and "in the vicinity of" the lower end mean a length that is no greater than 1/10 of the overall length in the height direction (vertical direction) of the seat back portion 20, so the vicinity of the upper end of the seat back portion 20 means a region at a distance no greater than 1/10 of the overall length of the seat back portion 20 from the upper end of the seat back portion 20, and the vicinity of the lower end of the seat back portion 20 means a region at a distance no greater than 1/10 of the overall length of the seat back portion 20 from the lower end of the seat back portion 20. In this regard, fig. 3(a)-(d) illustrate a mode in which the recess 51 is used rather than the opening 52. It is of course equally possible to replace the recess 51 in fig. 3(a)-(d) with an opening 52 such as that illustrated in fig. 6(a)-(c).

As illustrated in fig. 6(a)-(c), when the opening 52 is provided over the area from the lower end to the upper end of the seat back portion 20, the seat back portion 20 is divided at a substantially central position in the widthwise direction at the location where the vehicle occupant's back should be supported, and a first seat back portion 21 and a second seat back portion 22 are formed. In this case, the seat back portion 20 comprises the first seat back portion 21 and the second seat back portion 22. As illustrated in fig. 6(a), the first seat back portion 21 and the second seat back portion 22 may be joined by a joining member 29.

It should be noted that when the seat back portion 20 comprises the first seat back portion 21 and the second seat back portion 22 in this way, the interval between the first seat back portion 21 and the second seat back portion 22 may be adjusted, as appropriate. When such a mode is adopted, the user is able to position the first seat back portion 21 and the second seat back portion 22 at the desired interval.

In the mode illustrated in fig. 6(a), the upper-end region of the first seat back portion 21 and the upper-end region of the second seat back portion 22 are joined by means of the joining member 29. This mode does not imply a limitation, however, and the lower-end region of the first seat back portion 21 and the lower-end region of the second seat back portion 22 may equally be joined by means of the joining member 29, or a central region in the height direction of the first seat back portion 21 and a central region in the height direction of the second seat back portion 22 may equally be joined by the joining member 29, or the upper-end region of the first seat back portion 21 and the upper-end region of the second seat back portion 22 may be joined by the joining member 29 while the lower-end region of the first seat back portion 21 and the lower-end region of the second seat back portion 22 are also joined by means of the joining member 29. Furthermore, the position of the joining member 29 may be selected, as appropriate, and the joining member 29 may be disposed at one or more positions including the upper-end region, central region and lower-end region of the first seat back portion 21 and the second seat back portion 22. Moreover, this mode may be applied not only to front seats such as the driver's seat and the passenger seat, but also to a rear seat such as a bench seat.

Furthermore, as illustrated in fig. 5, according to this mode of embodiment, a flexible member 60 comprising a material softer than the seat back portion 20 may be disposed inside the recess 51 or the opening 52. Materials such as an air cushion or a sponge may be cited as the flexible member 60.

In this connection, materials which are conventionally used in vehicle seats may be employed without modification as the material of the vehicle seat 1. By way of example, it is also possible to produce the vehicle seat 1 in accordance with this mode of embodiment by utilizing urethane and a surface skin material. This is not limiting, however, and it is also possible to produce the vehicle seat 1 using a hard material such as a resin or wood etc.

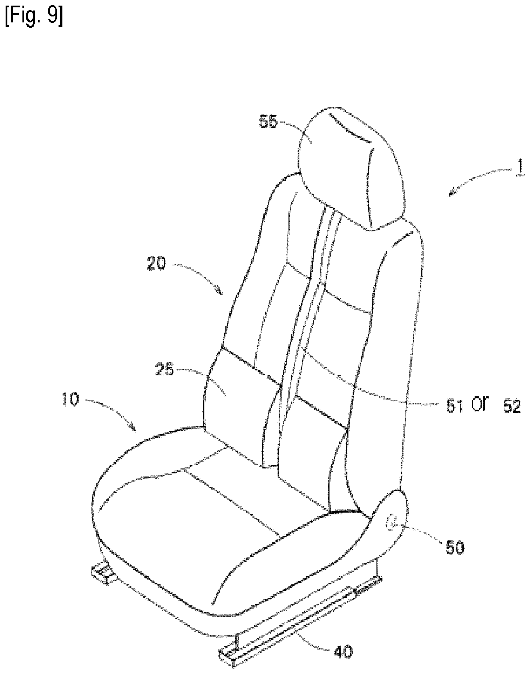

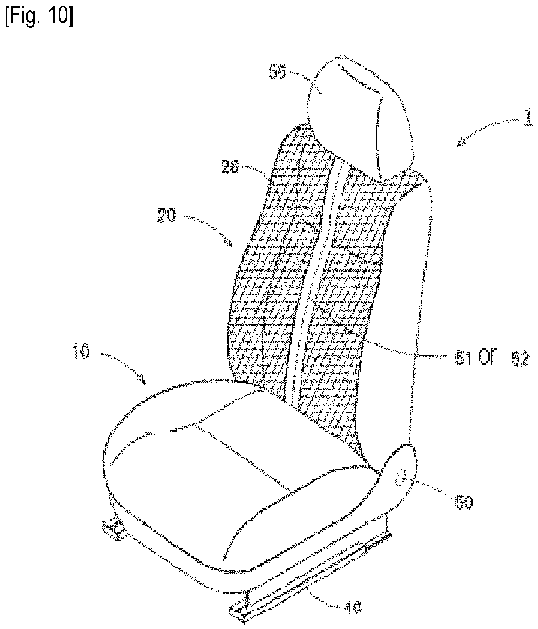

Furthermore, as illustrated in fig. 9, the seat back portion 20 according to this mode of embodiment may comprise a lumbar support portion 25 consisting of a lumbar support or the like for supporting the lumbar region of a vehicle occupant. When this kind of lumbar support portion is included, it is possible to support the lumbar region of a vehicle occupant by means of said lumbar support portion 25 while preventing the transmission of vibration to the backbone, by virtue of the recess 51 or opening 52, which is advantageous in that stability can be improved. Furthermore, as illustrated in fig. 10, the seat back portion 20 according to this mode of embodiment may comprise a mesh portion 26 on the surface thereof. The recess 51 or the opening 52 may also be provided on the lumbar support portion 25.

### <<Advantage>>

The advantage achieved in accordance with this mode of embodiment having the configuration described above will be described next in regard to advantages that have not yet been stated and particularly important advantages.

A first subject for discussion is the manner in which impacts to which the automobile is subjected from the road surface are transmitted to a vehicle occupant from the vehicle seat, and how such impacts are perceived by the vehicle occupant. In a vehicle seat having a normal structure, impacts from the road surface are simultaneously transmitted to both the seat cushion portion and to the seat back portion. When the vehicle occupant is seated on the vehicle seat, the seat cushion is in contact with the buttocks and supports same, while the seat back portion is in contact with the back and supports same. Impacts from the road surface are transmitted in the following order, namely: tire, suspension, vehicle body and vehicle seat, and the impacts to which a vehicle occupant is subjected from the vehicle seat are transmitted to the buttocks from the seat cushion and simultaneously to the back from the seat back portion.

It is generally considered effective to lessen impacts transmitted from the seat cushion portion to the buttocks in order to lessen impacts to which a vehicle occupant is subjected from the vehicle seat, and various designs have been adopted for the seat cushion portion. In actual fact, however, the buttocks are not a part of the body especially sensitive to impacts because of the large amount of muscle and fat. In contrast to this, the spinal cord with its concentration of central nerves and the surrounding backbone that are sensitive to impacts run through the center of the back, and the amount of muscle and fat surrounding the backbone is far less than that of the buttocks. Consequently, if a vehicle occupant is subjected to the same magnitude of impact on the buttocks and on the back, the impact perceived by the vehicle occupant through the back will be far greater than the impact perceived through the buttocks.

It is therefore clear that a very effective means for efficiently lessening the impact to which a vehicle occupant is subjected lies in taking measures to reduce the impact transmitted from the seat back portion 20 to the backbone (spinal cord).

As illustrated in fig. 1 to fig. 6, and in accordance with the present mode of embodiment, the recess 51 or the opening 52 extending in a vertical direction is formed in the seat back portion 20 at a substantially central position in the widthwise direction at the location where the vehicle occupant's back should be supported. Consequently, the recess 51 or the opening 52 can be positioned at the location where the vehicle occupant's backbone should be positioned and it is possible to prevent vibration from the automobile from being directly transmitted to the backbone. Moreover, the width of the backbone projecting from the back is around 0.5 cm-1 cm, so it is sufficient for the width of the recess 51 and the opening 52 to be an amount of 0.5 cm-1 cm. The seated position of a vehicle occupant is not necessarily constant, however, so the width of the recess 51 and the opening 52 may be 1 cm-3 cm, or may be 3 cm or greater. If the recess 51 and the opening 52 have a large width, this allows the backbone protruding from the back to be more reliably positioned within the recess 51 or the opening 52.

Furthermore, the seat back portion 20 according to this mode of embodiment is such that the recess 51 or the opening 52 extending in a vertical direction is formed at a substantially central position in the widthwise direction at the location where the vehicle occupant's back should be supported, and therefore this arrangement may be comfortably used even by persons who must avoid any impact to the spinal cord.

Furthermore, when the recess 51 or the opening 52 extending in a vertical direction is formed from the upper end to the lower end of the seat back portion 20 at a substantially central position in the widthwise direction of the seat back portion 20 (see fig. 3(a)), the recess 51 or the opening 52 can be positioned at the overall location where the vehicle occupant's backbone should be positioned while the vehicle occupant is seated, so it is possible to even more effectively prevent vibration from the automobile from being transmitted to the backbone. Furthermore, when the recess 51 or the opening 52 extending in a vertical direction is formed from the vicinity of the upper end to the lower end of the seat back portion 20 at a substantially central position in the widthwise direction of the seat back portion 20 (see fig. 3(b)), it is possible to provide a member at the position where the head restraint 55 is provided while preventing vibration from the automobile from being transmitted to the backbone, so the head restraint 55 can be stably attached. Furthermore, when the recess 51 or the opening 52 extending in a vertical direction is formed from the upper end to the vicinity of the lower end of the seat back portion 20 at a substantially central position in the widthwise direction of the seat back portion 20 (see fig. 3(c)), it is possible to provide a member at the position where the buttocks should make contact, so the effect of the recess 51 or the opening 52 on the ride quality can be lessened while preventing vibration from the automobile from being transmitted to the backbone. Furthermore, when the recess 51 or the opening 52 extending in a vertical direction is formed from the vicinity of the upper end to the vicinity of the lower end of the seat back portion 20 at a substantially central position in the widthwise direction of the seat back portion 20 (see fig. 3(d)), the head restraint 55 can be stably attached while preventing vibration from the automobile from being transmitted to the backbone, and the effect of the recess 51 or the opening 52 on the ride quality can also be lessened.

It should be noted that when the recess 51 or the opening 52 extending in a vertical direction is formed from the vicinity of the upper end to the vicinity of the lower end of the seat back portion 20 at a substantially central position in the widthwise direction of the seat back portion 20, and a mode as shown in fig. 2(a) is adopted in which the recess 51 or the opening 52 extends in a vertical direction including a central portion when the seat back portion 20 is divided equally in three in the height direction thereof, the recess 51 or the opening 52 can be positioned at the location where the backbone of the seated vehicle occupant projects to the rear by the greatest amount, and it is possible to effectively prevent vibration from the automobile from being transmitted to the backbone.

In addition, as illustrated in fig. 2(b), when a mode is adopted in which the recess 51 or the opening 52 extends in a vertical direction including two central portions (a first central portion and a second central portion) when the seat back portion 20 is divided equally in four in the height direction thereof, the recess 51 or the opening 52 can be positioned over an even wider range at the location where the backbone of the seated vehicle occupant projects to the rear by the greatest amount, and it is possible to more effectively prevent vibration from the automobile from being transmitted to the backbone.

Furthermore, as illustrated in fig. 5, according to this mode of embodiment, the flexible member 60 comprising a material softer than the seat back portion 20 may be disposed inside the recess 51 or inside the opening 52. According to such a mode, the flexible member 60 is positioned at the location where the vehicle occupant's backbone should be positioned, and vibration from the automobile that has passed through this kind of flexible member 60 is weaker than vibration from the automobile that has passed through the seat back portion 20 which has not undergone any kind of processing, so a commensurate effect can be demonstrated.

Furthermore, according to this mode of embodiment, the recess 51 or the opening 52 is formed in the actual seat back portion 20 so said recess 51 or opening 52 can be positioned at a fixed location which enables the recess 51 or the opening 52 to be positioned more reliably at the location of the vehicle occupant's backbone.

By virtue of this mode of embodiment as described above, it is possible to simply and inexpensively improve the ride quality in a vehicle such as an automobile under all kinds of road surface and travel conditions, without impairing drivability which conflicts with ride quality.

Furthermore, according to this mode of embodiment, there is no need to use an electronic device or a pump in order to improve the ride quality, so there is no excess energy consumption at all.

It should be noted that the vehicle seat 1 according to this mode of embodiment may be utilized in all kinds of vehicles, including not only automobiles such as four-wheel-drive vehicles traveling over uneven roads, sports cars and "sporty" cars having tightly-set suspension in order to enhance drivability, trucks and buses intended for long-distance driving, commercial vehicles, passenger vehicles for which the emphasis is on ride quality, and various types of vehicles for participation in rallies, but also railway vehicles such as trams and trains, motorcycles equipped with a seat back and side cars, go-karts, military vehicles in general including tanks, cultivators, heavy machinery such as bulldozers, horse-drawn carriages, cable cars, ropeways, ski lifts, aircraft such as passenger and military aircraft, watercraft such as motor boats and yachts susceptible to impact from the water surface and cruisers, and wheelchairs etc.

### Second Mode of Embodiment

A second mode of embodiment of the present invention will be described next.

The first mode of embodiment was described through the use of a mode relating to the vehicle seat 1, but the second mode of embodiment will be described through the use of a mode relating to a vehicle seat member (vehicle seat attachment) 80 attached to the vehicle seat 1.

The configuration of the second mode of embodiment is otherwise substantially the same as that of the first mode of embodiment. The same reference symbols will be used for elements in the second mode of embodiment which are the same as those in the first mode of embodiment and such elements will not be described in detail again.

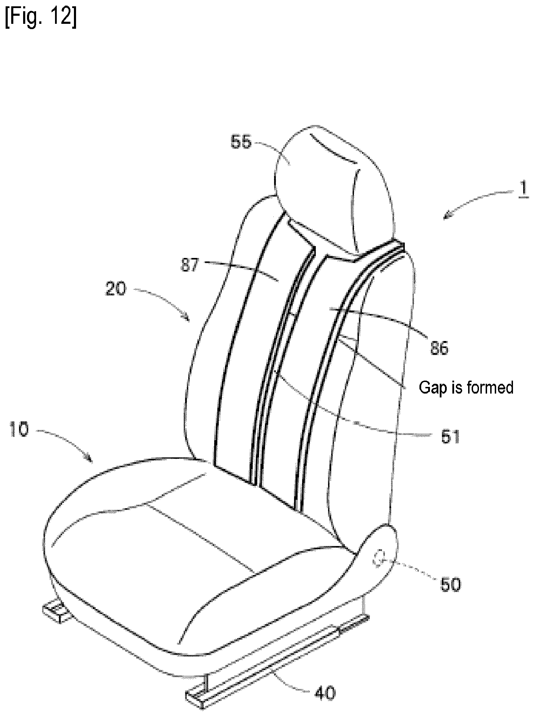

As illustrated in fig. 7 and fig. 12, the vehicle seat member 80 according to this mode of embodiment can be installed on a seat back portion 20 of a vehicle seat 1. The vehicle seat member 80 comprises: an attachment seat main-body portion 81 in which a recess 51 or an opening 52 extending in a vertical direction is formed in a substantially central position in the widthwise direction at the location where a vehicle occupant's back should be supported; and fixing members 88 such as belts for securing the attachment seat main-body portion 81 to the seat back portion 20. It should be noted that it is equally possible not to provide such fixing members 88. The position of the attachment seat main-body portion 81 is not fixed, however, if the fixing members 88 are not provided, which is not especially desirable from the point of view of preventing vibration from being transmitted to the vehicle occupant's backbone. At the same time, the advantage of not using the fixing members 88 lies in the fact that the vehicle seat member 80 can be easily used in all locations.

The installed vehicle seat member 80 may be such that it cannot be removed from the vehicle seat 1. By ensuring that the vehicle seat member 80 cannot be removed from the vehicle seat 1, it is possible to reliably position the attachment seat main-body portion 81 at a fixed location, which is advantageous in that the recess 51 or the opening 52 can be more reliably positioned at the location where the vehicle occupant's backbone should be positioned.

The shape of the seat back portion 20 and the shape of the vehicle seat member 80 are not necessarily formed in such a way as to be matching, which is clear from a comparison of the shape of the seat back portion 20 illustrated in fig. 1 and fig. 6(a) etc. and the shape of the vehicle seat member 80 illustrated in fig. 7. As illustrated in fig. 7 and fig. 12, when the vehicle seat member 80 is attached to the seat back portion 20, a gap is therefore formed between the seat back portion 20 and the vehicle seat member 80. When such a gap is formed, a cushioning function can be achieved by virtue of the vehicle seat member 80 and said gap. It is therefore possible to more effectively absorb vibration from the automobile. Furthermore, the vehicle seat member 80 may be formed from a relatively rigid material (e.g., a leather member) in such a way that a gap can be reliably and deliberately formed between the seat back portion 20 and the vehicle seat member 80. It should be noted that even if a relatively rigid member is used in this way, the recess 51 or the opening 52 is still formed at a location corresponding to the backbone, and therefore the function for preventing vibration from the automobile from being transmitted to the backbone can be maintained. The material forming the seat back portion 20 and the material forming the vehicle seat member 80 may have a comparable rigidity, or the material forming the vehicle seat member 80 may be more rigid than the material forming the seat back portion 20.

It is assumed that one vehicle occupant is generally seated in each of the front seats such as the driver's seat and passenger seat, and therefore the recess 51 or the opening 52 extending in a vertical direction is formed at a substantially central position in the widthwise direction of the attachment seat main-body portion 81 in the case of the vehicle seat member 80 attached to the front seats. On the other hand, it is assumed that a number of vehicle occupants are seated in the case of the vehicle seat member 80 attached to rear seats such as a bench seat (see fig. 4), and therefore recesses 51 or openings 52 extending in a vertical direction are formed at substantially central positions in the widthwise direction at locations where the vehicle occupants' backs should be supported (three locations in fig. 4).

The recess 51 or the opening 52 may extend in a vertical direction including a central portion when the attachment seat main-body portion 81 is divided equally in three in the height direction thereof (see fig. 2(a)), and may also extend in a vertical direction including two central portions (a first central portion and a second central portion) when the attachment seat main-body portion 81 is divided equally in four in the height direction thereof (see fig. 2(b)). It should be noted that the height of the attachment seat main-body portion 81 according to this mode of embodiment may be substantially the same height as that of the seat back portion 20. Furthermore, the widthwise center of the attachment seat main-body portion 81 according to this mode of embodiment may be positioned substantially at the center of the seat back portion 20 when the attachment seat main-body portion 81 is installed on the seat back portion 20.

The recess 51 or the opening 52 extending in a vertical direction may be formed from an upper end to a lower end of the attachment seat main-body portion 81 at a substantially central position in the widthwise direction of the attachment seat main-body portion 81 (see fig. 8(a)). Furthermore, the recess 51 or the opening 52 extending in a vertical direction may be formed from the vicinity of the upper end to the lower end of the attachment seat main-body portion 81 at a substantially central position in the widthwise direction of the attachment seat main-body portion 81 (see fig. 8(b)). Furthermore, the recess 51 or the opening 52 extending in a vertical direction may be formed from the upper end to the vicinity of the lower end of the attachment seat main-body portion 81 at a substantially central position in the widthwise direction of the attachment seat main-body portion 81 (see fig. 8(c)). Furthermore, the recess 51 or the opening 52 extending in a vertical direction may be formed from the vicinity of the upper end to the vicinity of the lower end of the attachment seat main-body portion 81 at a substantially central position in the widthwise direction of the attachment seat main-body portion 81 (see fig. 8(d)). In this regard, fig. 8(a)-(d) illustrates a mode employing the opening 52 rather than the recess 51. The opening 52 in fig. 8(a)-(d) may of course be replaced by the recess 51.

It should be noted that when the opening 52 is provided over the area from the lower end to the upper end of the attachment seat main-body portion 81, the attachment seat main-body portion 81 is divided at a substantially central position in the widthwise direction at the location where the vehicle occupant's back should be supported, and a first attachment seat main-body portion 86 and a second attachment seat main-body portion 87 are formed. In this case, the attachment seat main-body portion 81 comprises the first attachment seat main-body portion 86 and the second attachment seat main-body portion 87. Here, the first attachment seat main-body portion 86 and the second attachment seat main-body portion 87 may be joined by means of joining members 89 such as illustrated in fig. 7. It is, of course, not essential for these joining members 89 to be provided. In the mode illustrated in fig. 12, the first attachment seat main-body portion 86 and the second attachment seat main-body portion 87 are joined at a back surface of the seat back portion 20 to form a single element, and the location of this join constitutes the "fixing member" for fixing the attachment seat main-body portion 81 to the seat back portion 20. This is the same as the situation when the strap-like members referenced "88" in fig. 7 constitute the "fixing members". Furthermore, the attachment seat main-body portion 81 may be directly or indirectly attached to the vehicle seat member 80, and the attachment seat main-body portion 81 may be such that it cannot be removed from the vehicle seat member 80. When the attachment seat main-body portion 81 cannot be removed in this way, the location where the attachment seat main-body portion 81 is fixed to the vehicle seat member 80 is included in the "fixing member".

In the mode illustrated in fig. 7, the upper-end region of the first attachment seat main-body portion 86 and the upper-end region of the second attachment seat main-body portion 87 are joined by means of the joining member 89 comprising a belt or the like, and the lower-end region of the first attachment seat main-body portion 81 and the lower-end region of the second attachment seat main-body portion 87 are joined by means of the joining member 89. This mode does not imply a limitation, however, and the upper-end region of the first attachment seat main-body portion 86 and the upper-end region of the second attachment seat main-body portion 87 may equally be joined by means of the joining member 89 in the form of a link or a frame. Furthermore, the position of the joining member 89 may be selected, as appropriate, and the joining member 89 may be disposed at one or more positions including the upper-end region, central region and lower-end region of the first attachment seat main-body portion 86 and second attachment seat main-body portion 87. Moreover, this mode may be applied not only to front seats such as the driver's seat and the passenger seat, but also to a rear seat such as a bench seat.

When the joining member 89 according to this mode of embodiment as described above comprises an adjustment belt to enable length adjustment, the interval between the first attachment seat main-body portion 86 and the second attachment seat main-body portion 87 can be suitably adjusted. This allows the user to position the first attachment seat main-body portion 86 and the second attachment seat main-body portion 87 at the desired interval.

Furthermore, according to this mode of embodiment, the flexible member 60 (see fig. 5) comprising a material softer than the attachment seat main-body portion 81 may be disposed inside the recess 51 or the opening 52. Materials such as an air cushion or a sponge may be cited as the flexible member 60.

The first attachment seat main-body portion 86 and the second attachment seat main-body portion 87 may be air cushions. There is no particular limitation as to the material of the first attachment seat main-body portion 86 and the second attachment seat main-body portion 87, and they may be formed, for example, from an elastic member, or each of the first attachment seat main-body portion 86 and the second attachment seat main-body portion 87 may be formed from leather.

This mode of embodiment also makes it possible to demonstrate the same advantages as in the first mode of embodiment. Those advantages were described in detail in the first mode of embodiment, so the advantages of the present mode of embodiment will be described here without repeating the previous advantages, as appropriate.

According to this mode of embodiment, the recess 51 or the opening 52 extending in a vertical direction is formed in the attachment seat main-body portion 81 at a substantially central position in the widthwise direction at the location where the vehicle occupant's back should be supported. When the vehicle seat member 80 according to this mode of embodiment is installed on the seat back portion 20, the recess 51 or the opening 52 can be positioned at the location where the vehicle occupant's backbone should be positioned, and this makes it possible to prevent vibration from the automobile from being transmitted to the backbone.

Furthermore, when the recess 51 or the opening 52 extending in a vertical direction is formed from the upper end to the lower end of the attachment seat main-body portion 81 at a substantially central position in the widthwise direction of the attachment seat main-body portion 81 (see fig. 8(a)), the recess 51 or the opening 52 can be positioned at the overall location where the vehicle occupant's backbone should be positioned while the vehicle occupant is seated, so it is possible to even more effectively prevent vibration from the automobile from being transmitted to the backbone. Furthermore, when the recess 51 or the opening 52 extending in a vertical direction is formed from the vicinity of the upper end to the lower end of the attachment seat main-body portion 81 at a substantially central position in the widthwise direction of the attachment seat main-body portion 81 (see fig. 8(b)), it is possible to prevent vibration from the automobile from being transmitted to the backbone while stability for the head is maintained. Furthermore, when the recess 51 or the opening 52 extending in a vertical direction is formed from the upper end to the vicinity of the lower end of the attachment seat main-body portion 81 at a substantially central position in the widthwise direction of the attachment seat main-body portion 81 (see fig. 8(c)), it is possible to provide a member at the position where the buttocks should make contact, so the effect of the recess 51 or the opening 52 on the ride quality can be lessened while preventing vibration from the automobile from being transmitted to the backbone. Furthermore, when the recess 51 or the opening 52 extending in a vertical direction is formed from the vicinity of the upper end to the vicinity of the lower end of the attachment seat main-body portion 81 at a substantially central position in the widthwise direction of the attachment seat main-body portion 81 (see fig. 8(d)), stability for the head is maintained while preventing vibration from the automobile from being transmitted to the backbone, and the effect of the recess 51 or the opening 52 on the ride quality can also be lessened.

It should be noted that when the recess 51 or the opening 52 extending in a vertical direction is formed from the vicinity of the upper end to the vicinity of the lower end of the attachment seat main-body portion 81 at a substantially central position in the widthwise direction of the attachment seat main-body portion 81, and a mode is adopted in which the recess 51 or the opening 52 extends in a vertical direction including a central portion when the attachment seat main-body portion 81 is divided equally in three in the height direction thereof, the recess 51 or the opening 52 can be positioned at the location where the backbone of the seated vehicle occupant projects to the rear by the greatest amount, and it is possible to effectively prevent vibration from the automobile from being transmitted to the backbone.

In addition, when a mode is adopted in which the recess 51 or the opening 52 extends in a vertical direction including two central portions (a first central portion and a second central portion) when the attachment seat main-body portion 81 is divided equally in four in the height direction thereof, the recess 51 or the opening 52 can be positioned over an even wider range at the location where the backbone of the seated vehicle occupant projects to the rear by the greatest amount, and it is possible to more effectively prevent vibration from the automobile from being transmitted to the backbone.

According to this mode of embodiment, the flexible member 60 comprising a material softer than the attachment seat main-body portion 81 may be disposed inside the recess 51 or inside the opening 52. According to such a mode, the flexible member 60 is positioned at the location where the vehicle occupant's backbone should be positioned, and vibration from the automobile that has passed through this kind of flexible member 60 is weaker than vibration from the automobile that has passed through the seat back portion 20 which has not undergone any kind of processing, so a commensurate effect can be demonstrated.

Furthermore, according to this mode of embodiment, the recess 51 or the opening 52 is formed in the vehicle seat member 80 which is detachable from the seat back portion 20, so it is possible to use a single vehicle seat member 80 for a plurality of vehicles. The ride quality of the vehicle such as an automobile can therefore be improved at a (relatively) lower cost.

Furthermore, the vehicle seat member 80 according to this mode of embodiment may comprise a lumbar support portion consisting of a lumbar support or the like for supporting the lumbar region of a vehicle occupant. When this kind of lumbar support portion is included, it is possible to support the lumbar region of a vehicle occupant by means of said lumbar support portion while preventing the transmission of vibration to the backbone, by virtue of the recess 51 or opening 52, which is advantageous in that stability can be improved. Furthermore, the vehicle seat member 80 according to this mode of embodiment may comprise a mesh portion on the surface thereof. The recess 51 or the opening 52 may also be provided on the lumbar support portion.

The vehicle seat member 80 may be adapted in such a way that the lengthwise direction thereof can be folded at two, three or more locations. Furthermore, folding may also be possible in the short direction. In such cases, the folding positions may be determined in advance, or if this is not the case, folding may be possible at any location. It should be noted that when the attachment seat main-body portion 81 is an air cushion, the size thereof may be reduced by bleeding the air, so there is no need for the folding positions to be determined in advance.

It should be noted that the vehicle seat member 80 according to this mode of embodiment may also be utilized not only in automobiles such as four-wheel-drive vehicles traveling over uneven roads, sports cars and "sporty" cars having tightly-set suspension in order to enhance drivability, trucks and buses intended for long-distance driving, commercial vehicles, passenger vehicles for which the emphasis is on ride quality, and various types of vehicles for participation in rallies, but also in railway vehicles such as trams and trains, motorcycles equipped with a seat back and side cars, go-karts, military vehicles in general including tanks, cultivators, heavy machinery such as bulldozers, horse-drawn carriages, cable cars, ropeways, ski lifts, aircraft such as passenger and military aircraft, watercraft such as motor boats and yachts susceptible to impact from the water surface and cruisers, and wheelchairs etc.

Finally, the descriptions of the abovementioned modes of embodiment and the disclosure of the drawings are merely an example to illustrate the invention described in the claims, and said invention is not limited by the descriptions of the abovementioned modes of embodiment or the disclosure of the drawings.

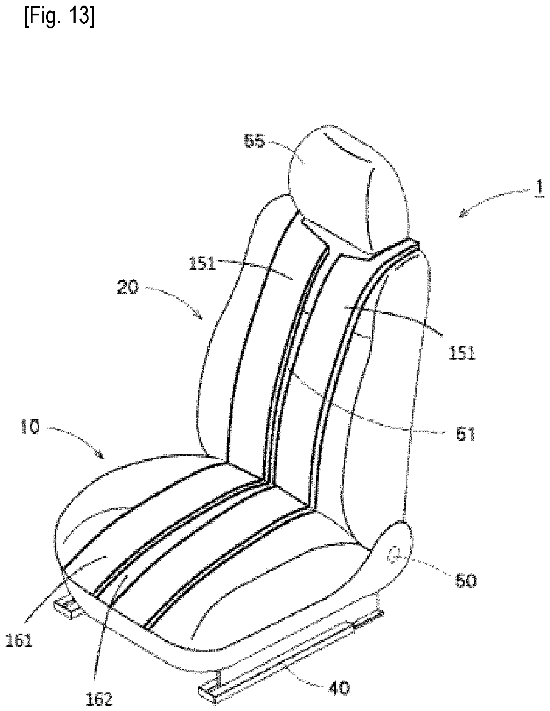

As one example, a recess 162 may be formed in the seat cushion portion 10 (by forming a projection 161) (see fig. 13) or an opening may be formed. Furthermore, a vehicle cushion member 170 which can be attached to the seat cushion portion 10 may be provided (see fig. 14). According to the mode illustrated in fig. 14, an opening 171 is formed between the vehicle cushion members 170.

It should be noted that the recess 51 or the opening 52 is used when it is necessary to improve the ride quality in accordance with the state of the road surface etc., but the recess 51 of the opening 52 may be closed off when the state of the road surface is good and there is no particular need to improve the ride quality. In terms of the method of closure, an insertion member fitting the shape of the recess 51 or the opening 52 may be inserted into the recess 51 or the opening 52, or a structural component (insertion member) for closing off the recess 51 or the opening 52 may be mechanically or electrically moved in order to close off same.

### Key to Symbols

- 1: Vehicle seat
- 10: Seat cushion portion
- 20: Seat back portion
- 21: First seat back portion
- 22: Second seat back portion
- 29: Joining member
- 51: Recess
- 52: Opening
- 60: Flexible member
- 80: Vehicle seat member
- 81: Attachment seat main-body portion
- 86: First attachment seat main-body portion
- 87: Second attachment seat main-body portion
- 89: Joining member

## Claims

1. A vehicle seat comprising:
a seat cushion portion for supporting a vehicle occupant's buttocks, and
a seat back portion for supporting a vehicle occupant's back,
**characterized in that** a recess or an opening extending in a vertical direction is formed in the seat back portion at a substantially central position in the widthwise direction at the location where the vehicle occupant's back should be supported.

2. The vehicle seat as claimed in claim 1, **characterized in that** the recess or the opening extends in a vertical direction including a central portion when the seat back portion is divided equally in three in the height direction thereof.

3. The vehicle seat as claimed in claim 1 or 2, **characterized in that** a flexible member comprising a material softer than the seat back portion is disposed inside the recess or inside the opening.

4. The vehicle seat as claimed in any one of claims 1 to 3, **characterized in that** the seat back portion comprises a first seat back portion and a second seat back portion divided by means of an opening.

5. The vehicle seat as claimed in any one of claims 1 to 4, **characterized in that** the recess is formed as a result of a projection being formed on the seat back portion.

6. The vehicle seat as claimed in any one of claims 1 to 5, **characterized in that** the seat back portion comprises a lumbar support portion for supporting the lumbar region of a vehicle occupant.

7. A vehicle seat member able to be installed on a seat back portion of a vehicle seat,
**characterized in that** it comprises an attachment seat main-body portion in which a recess or an opening extending in a vertical direction is formed at a substantially central position in the widthwise direction at the location where a vehicle occupant's back should be supported.

8. The vehicle seat member as claimed in claim 7,
**characterized in that** it further comprises a fixing member for fixing the attachment seat main-body portion to the seat back portion.

9. The vehicle seat member as claimed in claim 7 or 8,
**characterized in that** the recess or the opening extends in a vertical direction including a central portion when the attachment seat main-body portion is divided equally in three in the height direction thereof.

10. The vehicle seat member as claimed in any one of claims 7 to 9, **characterized in that** a flexible member comprising a material softer than the attachment seat main-body portion is disposed inside the recess or inside the opening.

11. The vehicle seat member as claimed in any one of claims 7 to 10, **characterized in that** the attachment seat main-body portion comprises a first attachment seat main-body portion and a second attachment seat main-body portion divided by means of an opening, and the first attachment seat main-body portion and the second attachment seat main-body portion are joined by means of a joining member.

12. The vehicle seat member as claimed in any one of claims 7 to 11, **characterized in that** a gap is formed between the seat back portion and the vehicle seat member.

13. The vehicle seat member as claimed in any one of claims 7 to 12, **characterized in that** the vehicle seat member cannot be removed from the vehicle seat.

14. The vehicle seat member as claimed in any one of claims 7 to 13, **characterized in that** the vehicle seat member comprises a lumbar support portion for supporting the lumbar region of a vehicle occupant.

15. A vehicle seat to which the vehicle seat member as claimed in any one of claims 7 to 14 is attached.

16. A vehicle comprising the vehicle seat as claimed in any one of claims 1 to 6 and 14.
